# EUROPEAN PATENT APPLICATION

(11) **EP 4 734 594 A1**
(43) Date of publication of application: **29.04.2026**
(21) Application number: 24850644.6
(22) Date of filing: 27.05.2024
(51) Int. Cl.: H04W 24/02

(54) **COMMUNICATION METHOD AND COMMUNICATION APPARATUS**

(30) Priority: 08.08.2023 CN 202310994594
(71) Applicant: Huawei Technologies Co., Ltd., Shenzhen, Guangdong 518129 (CN)
(72) Inventor: LI, Zhuoming, Shenzhen, Guangdong 518129 (CN)
(74) Representative: Gill Jennings & Every LLP
(86) International application number: PCT/CN2024/095495
(87) International publication number: WO 2025/030992

(57) **Abstract**

This application provides a communication method and a communication apparatus, which are used in the field of communication technologies. In technical solutions provided in this application, a UE receives indication information from an SMF entity, where the indication information indicates to transmit a first service data flow in a first network slice; the UE establishes a first PDU session in the first network slice based on the indication information; and the UE transmits the first service data flow by using the first PDU session. The UE transmits the first service data flow in the first PDU session newly established in the first network slice, and does not transmit, in the first PDU session, another service data flow that is not indicated. In this way, the UE can ensure a communication requirement of the first service data flow, and a communication requirement of the another service data flow is not affected.

## Description

This application claims priority to Chinese Patent Application No. 202310994594.1, filed with the China National Intellectual Property Administration on August 8, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication apparatus and a communication apparatus.

### BACKGROUND

In a communication system, for example, in a 5th generation (5th generation, 5G) system, a network side device may allocate an allowed (allowed) network slice to a UE and deliver a network slice selection policy (network slice selection policy, NSSP) to the UE. After the UE learns of the NSSP, when a service data flow needs to be sent, the UE selects, based on the NSSP, a network slice that needs to be used, and requests to establish a protocol data unit session (protocol data unit session, PDU Session) in the selected network slice, so that the UE can send and receive the service data flow by using the selected network slice. However, some UEs do not support the NSSP. Consequently, a PDU session that is requested to be established is not in a proper network slice, and one or more requirements such as performance and security during transmission of a service data flow by the UE cannot be ensured.

For a technical problem that a UE that does not support the NSSP cannot ensure a requirement of a service data flow, a solution is as follows: The network side device selects, for the UE, a network slice that needs to be used and establishes only one PDU session, and the UE transmits all service data flows in the network slice.

However, in the foregoing method, it is found that some service data flows of the UE fail to be transmitted.

### SUMMARY

This application provides a communication method and a communication apparatus to resolve a problem in a conventional technology that when a network slice is selected for all services of a UE, normal transmission of some services is affected and extra overheads are generated.

According to a first aspect, this application provides a communication method. The method includes: A UE receives indication information from a session management function (session management function, SMF) entity, where the indication information indicates to transmit a first service data flow in a first network slice; the UE establishes a first PDU session in the first network slice based on the indication information; and the UE transmits the first service data flow by using the first PDU session.

In this manner, that the UE transmits the first service data flow by using the first PDU session may further include the following meaning: Another service data flow of the UE is not transmitted by using the first PDU session, or the UE transmits another first service data flow by using another PDU session.

In the method, because the first PDU session is established in the first network slice, and the first service data flow is transmitted by using the first PDU session, a requirement of transmitting the first service data flow in the first network slice can be implemented, thereby helping ensure a transmission requirement of the first service data flow. In addition, the first PDU session may be used only to transmit the first service data flow, and does not transmit another service data flow, so that impact on a transmission requirement of the another service data flow can be avoided.

In the method, that the indication information indicates to transmit the first service data flow in the first network slice may be understood as follows: The indication information indicates that a network slice selected for the first service data flow is the first network slice.

In the method, that the UE receives the indication information from the SMF entity may include: The UE receives the indication information forwarded by the SMF entity by using a series of other network side devices.

In the method, in some possible implementations, before the UE receives the indication information from the SMF entity, the UE already can transmit the first service data flow by using another network slice. For example, before the UE receives the indication information from the SMF entity, the UE has established a PDU session in another network slice, and can transmit the first service data flow and/or another service data flow by using the PDU session.

In this possible implementation, the indication information may be understood as indicating the UE to switch to the first network slice to transmit the first service data flow, or indicating to reselect a network slice for the first service data flow, where the reselected network slice is the first network slice.

In some possible implementations, the indication information is carried in a PDU session modification command message. In other words, the PDU session modification command message may be reused to indicate the UE to transmit the first service data flow in the first network slice. This possible implementation can reduce signaling overheads.

In some possible implementations, the indication information includes an identifier of the first network slice and a PDU session establishment indication. The UE establishes the first PDU session in the first network slice based on the indication information. The UE requests to establish the first PDU session based on the PDU session establishment indication by using the identifier of the first network slice.

In some possible implementations, that the UE transmits the first service data flow by using the first PDU session includes: setting a packet filtering set of the first service data flow for the first PDU session; or setting, for the first PDU session, a packet filtering set corresponding to a quality of service flow identifier of the first service data flow.

In this possible implementation, it may be understood that the first PDU session may be used to transmit a service data flow indicated by the packet filtering set that is set for the first PDU session. The setting in this implementation may also be understood as association.

Because the packet filtering set of the first service data flow or the packet filtering set corresponding to the quality of service flow identifier of the first service data flow has been set for the first PDU session, the first service data flow can be transmitted by using the first PDU session.

Because the packet filtering set of the another service data flow or the packet filtering set corresponding to the quality of service flow identifier of the another service data flow has not been set for the first PDU session, the another service data flow is not transmitted by using the first PDU session.

In some possible implementations, the PDU session establishment indication is the packet filtering set. That the PDU session establishment indication is the packet filtering set may be understood as that the packet filtering set is carried in the PDU session modification command message to indicate the UE to newly establish a PDU session.

In this implementation, the packet filtering set not only may be used to indicate the newly established PDU session, but also may be used to associate the PDU session, so that the UE knows a service data flow that can be transmitted by using the newly established PDU session. In other words, one piece of information has a plurality of purposes, thereby reducing signaling overheads.

In some possible implementations, the PDU session establishment indication is a preset identifier. That the PDU session establishment indication is the preset identifier may be understood as that a specific flag is used to indicate the UE to newly establish a PDU session.

In this implementation, the PDU session establishment indication is decoupled from information such as the packet filtering set, so that implementation complexity can be reduced. Further, when the packet filtering set and/or the PDU session establishment indication is used for another purpose, impact on a current function of a peer party is avoided.

When the PDU session establishment indication is the preset identifier, in a possible implementation, the indication information further includes the packet filtering set. In this case, the indication information may further include the packet filtering set, so that the UE can associate or set the packet filtering set for the newly established PDU session, and further the UE knows a service data flow that can be transmitted by using the newly established PDU session.

When the PDU session establishment indication is the preset identifier, in some possible implementations, the method further includes: receiving a modification command message in the first PDU session, where the modification command message includes the packet filtering set.

In this implementation, after the packet filtering set is received in the first PDU session, it may be considered that the packet filtering set is a packet filtering set that is associated with the first PDU session or that should be set for the first PDU session, so that the UE learns of a service data flow that can be transmitted by using the newly established PDU session.

When the PDU session establishment indication is the preset identifier, in some possible implementations, a data packet of the first service data flow is received in the first PDU session, where the data packet carries a reflective service indication; and the packet filtering set is derived based on the reflective service indication.

In this implementation, when a data packet of a data data flow is received in the first PDU session and the data packet carries the reflective service indication, a source address and a destination address may be exchanged based on a packet feature of the service data flow in a receiving direction to derive the packet filtering set of the service data flow in a sending direction, so that the packet filtering set may be associated or set for the newly established PDU session, further the UE learns of a service data flow that can be transmitted by using the newly established PDU session.

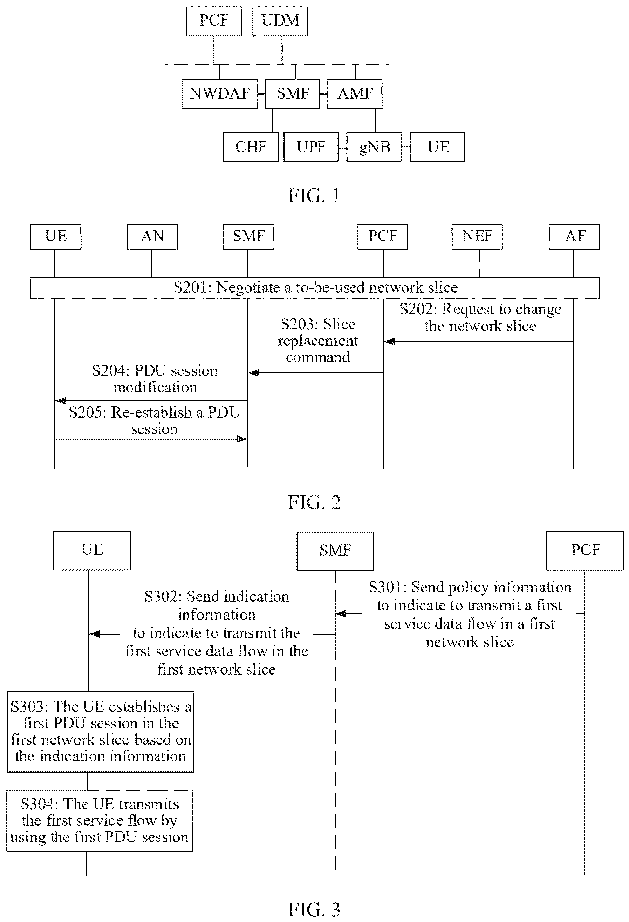

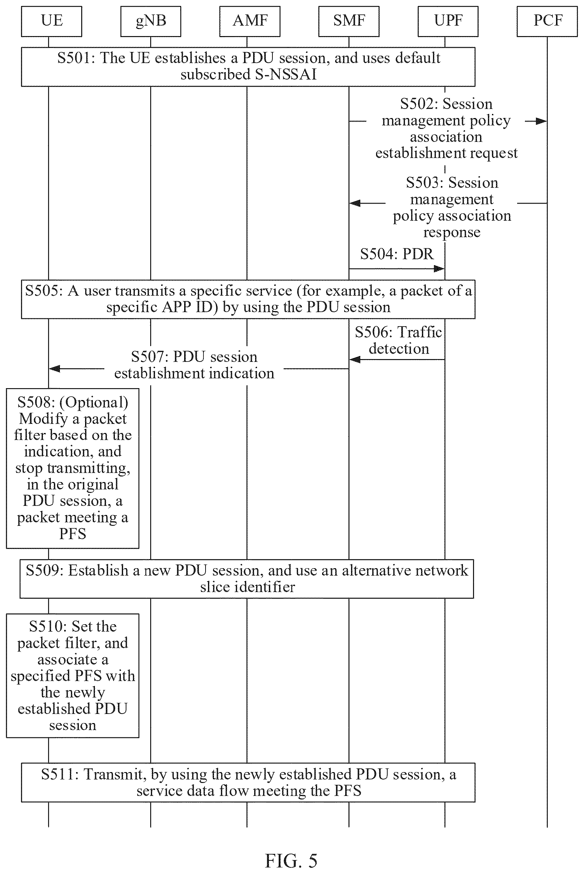

In an example, the UE in the method may be configured to implement all or some of the steps performed by the UE in the embodiment shown in FIG. 3 or FIG. 5.

According to a second aspect, this application provides a communication method. The method includes: An SMF entity receives policy information, where the policy information indicates to transmit a first service data flow in a first network slice; and the SMF entity sends indication information to a UE, where the indication information indicates to transmit the first service data flow in the first network slice.

In the method, the SMF indicates, based on the received information, the UE to transmit the first service data flow in the first network slice, so that a transmission requirement of the first service data flow can be ensured, and another service data flow can be prevented from being handed over to the first network slice, thereby ensuring an output requirement of the service data flow.

In an example, the SMF in the method may be configured to implement some steps performed by the SMF in the embodiment shown in FIG. 3, FIG. 4, FIG. 5, FIG. 6, FIG. 8, or FIG. 9.

For example, the SMF may be configured to implement all or some of the steps performed by the SMF in S502, S503, S504, S505, S506, S507, S509, and S511, or a step with a function similar to those of these steps.

For another example, the SMF may be configured to implement all or some of the steps performed by the SMF in S602, S605, S606, S607, S609, S610, and S611, or a step with a function similar to those of these steps.

For another example, the SMF may be configured to implement all or some of the steps performed by the SMF in S801, S803, S804, S805, S806, S807, S809, and S810, or a step with a function similar to those of these steps.

For another example, the SMF may be configured to implement all or some of the steps performed by the SMF in S901, S902, S903, S904, S905, S906, S907, S908, S909, S911, S912, S913, and S916, or a step with a function similar to those of these steps.

According to a third aspect, this application provides a communication method. The method includes: An SMF entity receives policy information, where the policy information indicates to transmit a first service data flow in a first network slice; and the SMF entity sends indication information to an access network device, where the indication information indicates to transmit the first service data flow in the first network slice.

In the method, the SMF indicates, based on the received information, the access network device to transmit the first service data flow in the first network slice, so that a transmission requirement of the first service data flow can be ensured, and another service data flow can be prevented from being handed over to the first network slice, thereby ensuring an output requirement of the service data flow.

It may be understood that for meanings of concepts that appear in the second aspect and the third aspect and that are the same as those in the first aspect, refer to related content in the first aspect. Details are not described herein again. The following describes some possible implementations of the second aspect and the third aspect.

In some possible implementations, that the SMF entity receives the policy information includes: The SMF entity receives a session policy modification message and/or a session management policy association establishment response message from a policy control function (policy control function, PCF) entity, where the session policy modification message and/or the session management policy association establishment response message carries the policy information.

In other words, the SMF entity learns, from the PCF entity, of the first service data flow that needs to be transmitted in the first network slice, or learns that the first service data flow needs to be transmitted in the first network slice.

In other words, the SMF entity indicates, only under an indication of the PCF entity, the UE or the access network device to transmit the first service data flow in the first network slice. In this way, accuracy of sending the indication information by the SMF entity can be improved.

The PCF entity sends the policy information to the SMF entity by using the session policy modification message and/or the session management policy association establishment response message. Reusing the session policy modification message and/or the session management policy association establishment response message can improve utilization of a signaling message and reduce signaling overheads.

In some possible implementations, that the SMF entity receives the policy information includes: The SMF entity receives session management subscription information from a unified data management (unified data management, UDM) entity, where the session management subscription information carries the policy information.

In other words, the SMF entity learns, from the UDM entity, of the first service data flow that needs to be transmitted in the first network slice, or learns that the first service data flow needs to be transmitted in the first network slice. In this way, the first service data flow can be transmitted based on subscription information of a user, thereby improving accuracy of sending the indication information by the SMF entity and ensuring that a requirement of the user is met.

The UDM entity sends the policy information to the SMF entity by using the session management subscription information. Reusing the session management subscription information can improve utilization of a signaling message and reduce signaling overheads.

In some possible implementations, the policy information includes an identifier of the first network slice and an identifier of the first service data flow, the identifier of the first network slice included in the policy information includes single network slice selection assistance information of the first network slice, and the identifier of the first service data flow included in the policy information includes a service data flow template of the first service data flow.

In this possible implementation, single network slice selection assistance information of a network slice is fully used to identify the network slice, so that utilization of information can be improved and implementation complexity of the method can be reduced.

In this possible implementation, the service data flow template is fully used to identify the network slice, so that the utilization of information can be improved and the implementation complexity of the method can be reduced.

In some possible implementations, when the SMF entity sends the indication information to the UE, the indication information is carried in a protocol data unit PDU session modification command message.

In some possible implementations, the indication information includes an identifier of the first network slice and a PDU session establishment indication.

In some possible implementations, the PDU session establishment indication is a packet filtering set of the first service data flow or a quality of service flow identifier of the first service data flow; or the PDU session establishment indication is a preset identifier, and the indication information further includes a packet filtering set of the first service data flow or a quality of service flow identifier of the first service data flow.

In some possible implementations, the PDU session establishment indication is a preset identifier. The method further includes: sending a modification command message in the first PDU session, where the modification command message includes a packet filtering set of the first service data flow or a quality of service flow identifier of the first service data flow; or sending a data packet of the first service data flow in the first PDU session, where the data packet carries a reflective service indication, and the reflective service indication indicates the UE to derive, based on the data packet, a packet filtering set of the first service data flow or a packet filtering set corresponding to a quality of service flow identifier of the first service data flow.

In some possible implementations, when the SMF entity sends the indication information to the access network device, the indication information is carried in an N2 interface session management message.

In this possible implementation, the N2 interface session management message is fully used to send the indication information, so that utilization of message signaling can be improved and signaling overheads can be reduced.

In some possible implementations, the indication information includes the identifier of the first network slice and the quality of service flow identifier of the first service data flow.

In this possible implementation, the quality of service flow identifier is fully used to identify the first service data flow, so that the utilization of information can be improved and the implementation complexity of the method can be reduced.

In some possible implementations, the method further includes: The SMF entity sends charging information to a CHF entity, where the charging information indicates that the first service data flow is transmitted by using the first network slice.

In this implementation, the SMF entity further sends the charging information to the charging function (charging function, CHF) entity, so that the CHF entity can accurately charge the first service data flow.

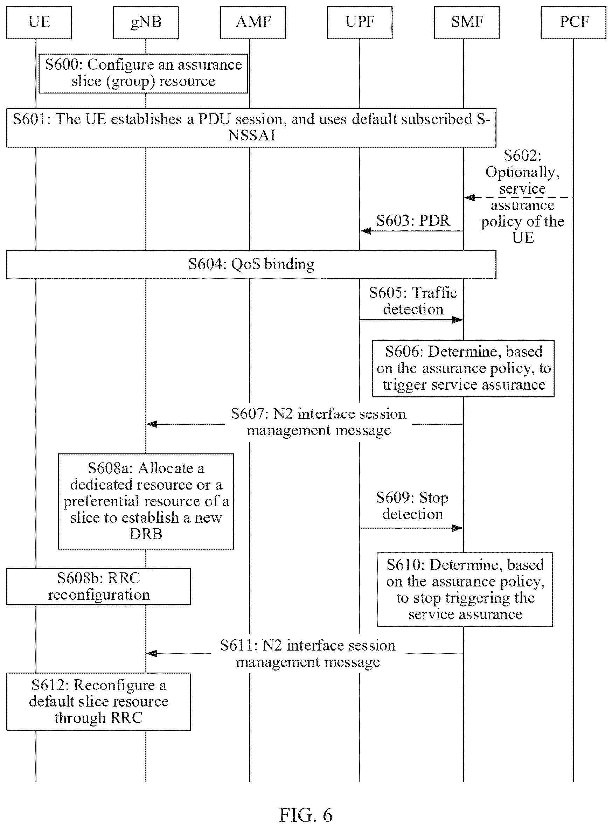

In an example, the SMF in the method may be configured to implement all or some of the steps performed by the SMF in the embodiment shown in any one of FIG. 6, FIG. 8, and FIG. 9.

According to a fourth aspect, this application provides a communication method. The method includes: A policy control function PCF entity sends policy information to a session management function SMF entity, where the policy information indicates to transmit a first service data flow in a first network slice.

In some possible implementations, the policy information is carried in a session policy modification message and/or a session management policy association establishment response message.

In some possible implementations, the PCF obtains assurance information from a unified data repository (unified data repository, UDR), where the assurance information indicates to transmit the first service data flow in the first network slice.

In some possible implementations, the assurance information includes an identifier of the first network slice and an identifier of the first service data flow, the identifier of the first network slice included in the assurance information includes single network slice selection assistance information of the first network slice, and the identifier of the first service data flow included in the assurance information includes an identifier of an application to which the first service data flow belongs.

In some possible implementations, the policy information includes an identifier of the first network slice and an identifier of the first service data flow, the identifier of the first network slice included in the policy information includes single network slice selection assistance information of the first network slice, and the identifier of the first service data flow included in the policy information includes a service data flow template of the first service data flow.

In an example, the PCF in the method may be configured to implement all or some of the steps performed by the PCF in the embodiment shown in any one of FIG. 3, FIG. 4, FIG. 5, FIG. 6, FIG. 8, and FIG. 9.

According to a fifth aspect, this application provides a communication method. The method includes: An access network device receives first indication information from an SMF entity, where the first indication information indicates to transmit a first service data flow in a first network slice; and the access network device transmits the first service data flow by using a first data radio bearer configured for the first network slice.

In some possible implementations, the first indication information is carried in an N2 interface session management message.

In some possible implementations, the first indication information includes an identifier of the first network slice and an identifier of the first service data flow, the identifier of the first network slice includes single network slice selection assistance information of the first network slice, and the identifier of the first service data flow includes a quality of service identifier of the first service data flow.

In some possible implementations, the access network device receives second indication information from the SMF entity, where the second indication information indicates to transmit the first service data flow in a second network slice or indicates that a network slice for transmitting the first service data flow is empty; and the access network device transmits the first service data flow by using a second data radio bearer configured for the second network slice.

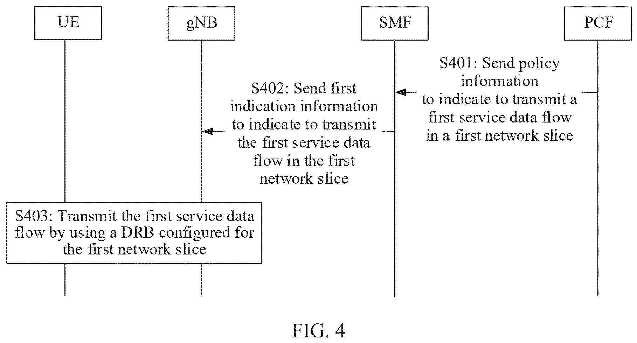

In an example, the access network device in the method may be configured to implement all or some of the steps performed by a gNB in the embodiment shown in FIG. 4, FIG. 6, FIG. 8, or FIG. 9.

According to a sixth aspect, this application provides a communication apparatus, including modules or units configured to implement the method according to any one of the first aspect or the possible implementations of the first aspect. It should be understood that the modules or units may implement corresponding functions by executing a computer program.

According to a seventh aspect, this application provides a communication apparatus, including modules or units configured to implement the method according to any one of the second aspect or the possible implementations of the second aspect. It should be understood that the modules or units may implement corresponding functions by executing a computer program.

According to an eighth aspect, this application provides a communication apparatus, including modules or units configured to implement the method according to any one of the third aspect or the possible implementations of the third aspect. It should be understood that the modules or units may implement corresponding functions by executing a computer program.

According to a ninth aspect, this application provides a communication apparatus, including modules or units configured to implement the method according to any one of the fourth aspect or the possible implementations of the fourth aspect. It should be understood that the modules or units may implement corresponding functions by executing a computer program.

According to a tenth aspect, this application provides a communication apparatus, including modules or units configured to implement the method according to any one of the fifth aspect or the possible implementations of the fifth aspect. It should be understood that the modules or units may implement corresponding functions by executing a computer program.

According to an eleventh aspect, this application provides a communication apparatus, including a processor. The processor is configured to perform the communication method according to any one of the first aspect or the possible implementations of the first aspect. The communication apparatus may be a UE or a chip or a chip system used in a UE.

According to a twelfth aspect, this application provides a communication apparatus, including a processor. The processor is configured to perform the communication method according to any one of the second aspect or the possible implementations of the second aspect. The communication apparatus may be an SMF entity or a chip or a chip system used in an SMF entity.

According to a thirteenth aspect, this application provides a communication apparatus, including a processor. The processor is configured to perform the communication method according to any one of the third aspect or the possible implementations of the third aspect. The communication apparatus may be an SMF entity or a chip or a chip system used in an SMF entity.

According to a fourteenth aspect, this application provides a communication apparatus, including a processor. The processor is configured to perform the communication method according to any one of the fourth aspect or the possible implementations of the fourth aspect. The communication apparatus may be a PFC entity or a chip or a chip system used in a PFC entity.

According to a fifteenth aspect, this application provides a communication apparatus, including a processor. The processor is configured to perform the communication method according to any one of the fifth aspect or the possible implementations of the fifth aspect. The communication apparatus may be an access network device or a chip or a chip system used in an access network device.

In the eleventh aspect to the fifteenth aspect, the apparatus may further include a memory, configured to store instructions and data. The memory is coupled to the processor. When the processor executes the instructions stored in the memory, the method described in the foregoing aspects may be implemented. The apparatus may further include a communication interface. The communication interface is used by the apparatus to communicate with another device. For example, the communication interface may be a transceiver, a circuit, a bus, a module, or another type of communication interface.

According to a sixteenth aspect, this application provides a computer-readable storage medium. The computer-readable medium stores program code executed by a communication apparatus. The program code includes instructions used to implement the method according to any one of the first aspect or the possible implementations of the first aspect.

According to a seventeenth aspect, this application provides a computer-readable storage medium. The computer-readable medium stores program code executed by a communication apparatus. The program code includes instructions used to implement the method according to any one of the second aspect or the possible implementations of the second aspect.

According to an eighteenth aspect, this application provides a computer-readable storage medium. The computer-readable medium stores program code executed by a communication apparatus. The program code includes instructions used to implement the method according to any one of the third aspect or the possible implementations of the third aspect.

According to a nineteenth aspect, this application provides a computer-readable storage medium. The computer-readable medium stores program code executed by a communication apparatus. The program code includes instructions used to implement the method according to any one of the fourth aspect or the possible implementations of the fourth aspect.

According to a twentieth aspect, this application provides a computer-readable storage medium. The computer-readable medium stores program code executed by a communication apparatus. The program code includes instructions used to implement the method according to any one of the fifth aspect or the possible implementations of the fifth aspect.

According to a twenty-first aspect, this application provides a computer program product including instructions. When the computer program product runs on a communication apparatus, the communication apparatus is enabled to implement the method according to any one of the first aspect or the possible implementations of the first aspect.

According to a twenty-second aspect, this application provides a computer program product including instructions. When the computer program product runs on a communication apparatus, the communication apparatus is enabled to implement the method according to any one of the second aspect or the possible implementations of the second aspect.

According to a twenty-third aspect, this application provides a computer program product including instructions. When the computer program product runs on a communication apparatus, the communication apparatus is enabled to implement the method according to any one of the third aspect or the possible implementations of the third aspect.

According to a twenty-fourth aspect, this application provides a computer program product including instructions. When the computer program product runs on a communication apparatus, the communication apparatus is enabled to implement the method according to any one of the fourth aspect or the possible implementations of the fourth aspect.

According to a twenty-fifth aspect, this application provides a computer program product including instructions. When the computer program product runs on a communication apparatus, the communication apparatus is enabled to implement the method according to any one of the fifth aspect or the possible implementations of the fifth aspect.

According to a twenty-sixth aspect, this application provides a communication system and a method performed by the communication system. The communication system includes: the communication apparatus according to the sixth aspect or the eleventh aspect, the communication apparatus according to the seventh aspect or the twelfth aspect, and the communication apparatus according to the ninth aspect or the fourteenth aspect.

According to a twenty-seventh aspect, this application provides a communication system and a method performed by the communication system. The communication system includes: the communication apparatus according to the eighth aspect or the thirteenth aspect, the communication apparatus according to the tenth aspect or the fifteenth aspect, and the communication apparatus according to the ninth aspect or the fourteenth aspect.

It may be understood that for effects that can be achieved in the second aspect to the twenty-fifth aspect, refer to the descriptions in the first aspect. Details are not described herein again.

### BRIEF DESCRIPTION OF DRAWINGS

FIG. 1 is a diagram of an application architecture of a communication system according to an embodiment of this application;
FIG. 2 is a schematic flowchart of a method for controlling slice selection by a network side device;
FIG. 3 is a diagram of a communication procedure according to an embodiment of this application;
FIG. 4 is a diagram of another communication procedure according to an embodiment of this application;
FIG. 5 is a schematic flowchart of a communication method according to an embodiment of this application;
FIG. 6 is a schematic flowchart of a network slice handover method according to an embodiment of this application;
FIG. 7 is a diagram of a radio resource configuration of a RAN;
FIG. 8 is a schematic flowchart of a network slice handover method according to another embodiment of this application;
FIG. 9 is a schematic flowchart of switching a network slice charging method according to another embodiment of this application;
FIG. 10 is a diagram of a structure of a communication apparatus according to an embodiment of this application; and
FIG. 11 is a diagram of a structure of a communication apparatus according to another embodiment of this application.

### DESCRIPTION OF EMBODIMENTS

The following describes technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that provide basically the same functions or purposes. A person skilled in the art may understand that the terms such as "first" and "second" do not limit a quantity or an execution sequence, and the terms such as "first" and "second" do not indicate a definite difference.

It should be noted that, in embodiments of this application, the word "example" or "for example" is used to represent giving an example, an illustration, or a description. Any embodiment or design solution described as an "example" or "for example" in this application should not be explained as being more preferred or having more advantages than another embodiment or design solution. To be precise, use of the word such as "example" or "for example" is intended to present a related concept in a specific manner.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may indicate: a, b, c, a-b, a-c, b-c, or a-b-c, where a, b, and c may be singular or plural.

A communication method in embodiments of this application may be applied to a network architecture of a cellular communication system. The cellular communication system may include a fourth generation (4th Generation, 4G) network system, a 5G system, and a future sixth generation (6th Generation, 6G) network system. In this application, a 5G system is used as an example for description below.

For ease of understanding the communication method provided in embodiments of this application, the following describes a system architecture and an application scenario of the communication method provided in embodiments of this application. It may be understood that the system architecture and the application scenario that are described in embodiments of this application are intended to describe the technical solutions in embodiments of this application more clearly, and do not constitute a limitation on the technical solutions provided in embodiments of this application.

FIG. 1 is a diagram of an application architecture of a communication system according to an embodiment of this application. As shown in FIG. 1, the architecture includes an access and mobility management function (access and mobility management function, AMF), an SMF network element, a PCF network element, a user plane function (user plane function, UPF), a data analysis network element (network data analytics function, NWDAF), a charging network element (charging function, CHF), UDM, a UE, and a gNB. An example of the network system is a 5G communication system.

The AMF is mainly used for attachment, mobility management, and a tracking area update procedure of a terminal in a mobile network. An access management network element terminates a non-access stratum (non-access stratum, NAS) message, completes registration management, connection management, reachability management, tracking area list (track area list, TA list) allocation, mobility management, and the like, and transparently routes a session management (session management, SM) message to a session management network element.

The SMF is mainly used for session management in the mobile network, such as session establishment, modification, and release. For example, an internet protocol (internet protocol, IP) address may be allocated to a terminal, and a user plane network element that provides a packet forwarding function may be selected.

The PCF mainly provides a user subscription data management function, a policy control function, a charging policy control function, quality of service (quality of service, QoS) control, and the like.

The UPF is mainly responsible for processing a user packet, for example, forwarding, charging, or lawful interception.

The NWDAF provides an intelligent analytics service and outputs analysis results through artificial intelligence and big data analysis in a format defined in a specification. The output analysis results are classified into two types: statistical analysis of historical data and prediction of future data. A service processing network element adjusts a network based on an output of the NWDAF, and optimizes operation of the network. For example, when finding, by using a statistical analysis result output by the NWDAF, that a packet loss rate of service packets that are being transmitted by the terminal exceeds a threshold and service experience is affected, the service processing network element takes a corresponding measure, for example, increases a packet retransmission ratio or attempts to improve the service experience.

The CHF mainly collects charging events from service processing network elements such as the SMF, the AMF, and the UPF, and charges a service of a user based on a pre-negotiated tariff.

In this embodiment, the AMF, the SMF, the PCF, the UPF, the NWDAF, and the CHF are main network functions of a core network in the system, and all belong to service-oriented control plane network function entities. Servicization enables the core network to form a flattened network architecture. By using a control plane signaling bus, control plane network function entities of a same network slice can discover each other by using a network repository function (NF repository function, NRF), obtain access address information of each other, and then directly communicate with each other by using the control plane signaling bus.

Any one of the foregoing functions in this application may also be referred to as an entity, a network element, or a function entity. For example, the AMF may also be referred to as an AMF entity, an AMF network element, or an AMF function entity. For another example, the SMF may also be referred to as an SMF entity, an SMF network element, an SMF function entity, or the like.

The UDM network element is configured to store and manage a user terminal network and service subscription data.

The UE may also be referred to as a terminal, a terminal device, a mobile station (mobile station, MS), a remote station (remote station, RS), or the like. The UE may be a device having a wireless transceiver function on a user side, and may be deployed on land, including indoor or outdoor, handheld, wearable, or in-vehicle deployment; or may be deployed on water, for example, on a ship; or may be deployed in air, for example, on an airplane, a balloon, or a satellite.

For example, the UE may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

An application scenario is not limited in this embodiment of this application. A specific technology, a device form, and a name that are used by the terminal device are not limited.

The gNB in the system represents an access network device. The access network device in this system may include a radio access network (radio access network, RAN) device and an access network (access network, AN), and is configured to be responsible for radio side access of the terminal device. A deployment form of the access network device includes a central unit (central unit, CU) and a distributed unit (distributed unit, DU) separate scenario and a single station scenario. In the separate scenario, the CU supports protocols such as a radio resource control (radio resource control, RRC) protocol, a packet data convergence protocol (packet data convergence protocol, PDCP), and a service data adaptation protocol (service data adaptation protocol, SDAP). The DU mainly supports a radio link control (radio link control, RLC) layer protocol, a media access control (media access control, MAC) layer protocol, and a physical layer protocol. In the single station scenario, a single station may include a (new radio Node, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station, a base band unit (base band unit, BBU), and the like.

It may be understood that an architecture in the communication system is merely an example, and the communication system provided in this application may further include more or fewer functions. For example, a network exposure function (network exposure function, NEF) may be further included. The NEF is mainly configured to isolate a third-party application function from a network function or a core network.

It may be understood that names of functions in the communication system shown in FIG. 1 are merely examples, and division into functional modules is also merely an example. Any communication system that can implement the function set in the communication system shown in FIG. 1 shall fall within the protection scope of this application.

In the communication field, a network slice technology is proposed in a communication system. In the network slice technology, a physical network is abstracted into a plurality of logical networks, that is, a plurality of network slices. Each network slice forms an end-to-end logical network. The end-to-end logical networks are logically isolated from each other and do not affect each other. A service of each network slice may be identified by using S-NSSAI (single-network slice selection assistance information, single network slice selection assistance information). The communication system may select a network slice based on the S-NSSAI (or a service data flow) carried in a service request of the terminal, and transmit service data of a customer in the selected network slice.

In some implementations of selecting a network slice for a service, the AMF may receive a network slice registration request message of the UE from the access network. The registration request information may include requested NSSAI (requested NSSAI), which may include one or more pieces of S-NSSAI.

The AMF may interact with network functions such as the UDM and the NSSF to process the registration request of the UE and allocate allowed NSSAI (including the S-NSSAI) to the UE, where the allowed NSSAI includes the foregoing S-NSSAI. That is, the UE successfully registers with the network slice, and the network side delivers the NSSP to the UE. Subsequently, the UE may request to establish a PDU session in the network slice.

In some implementations of the communication system, only a terminal side is allowed to actively initiate a request to establish a PDU session, and a network side is not allowed to actively establish a PDU session. In this case, when an APP on the UE needs to send a packet, the UE queries the NSSP by using an identifier (namely, an APP ID) of the APP, determines S-NSSAI of a network slice that needs to be used, and then initiates a PDU session establishment request message, which carries the S-NSSAI.

After receiving the PDU session establishment request message, the AMF selects the SMF in the network slice based on the S-NSSAI carried in the request message to process a session establishment request. If the session establishment request is accepted, the SMF selects a UPF in the network slice, and controls the UPF to establish a user plane connection to the RAN. The RAN also allocates an air interface resource to the network slice. In this way, the UE can receive and send a data packet by using the network slice.

However, the foregoing implementation has the following technical problem: If the UE does not support the NSSP, the PDU session establishment request initiated by the UE does not carry the S-NSSAI. In this case, the AMF obtains, from subscription information of the UE, default S-NSSAI subscribed by a user. In a subsequent procedure, the core network and the RAN can establish the PDU session only in the default subscribed slice of the UE.

Using a default slice usually cannot meet a performance or security isolation requirement of the user when the user uses a specific service. For this problem, a method for controlling network slice selection by a network side device is proposed in the communication field. In some implementations, when the user uses the specific service, an application server requests a network handover, to change the network slice used for the established PDU session.

For example, FIG. 2 is a schematic flowchart of a method for controlling slice selection by a network side device. As shown in FIG. 2, the method may include S201, S202, S203, S204, and S205.

S201: Based on a PDU session established by a UE, a client of an application negotiates with a server (application function, AF) of the application by using the PDU session, to request to switch a network slice used to transmit an application service packet. For example, when a game client program is run on the UE, a user wants to pay for game acceleration. In this case, if the UE establishes a PDU session in a default network slice to which the user subscribes by default, a game client negotiates with a game server, and the AF determines to use a low-latency network slice for the service.

S202: The AF sends a network slice change request to a PCF by using an NEF, where the network slice change request includes an identifier of a UE (UE ID) and a slice identifier of a low-latency network slice.

S203: The PCF sends a slice replacement command to an SMF, where the command includes the identifier of the UE; and sends, to the SMF, the identifier of the low-latency network slice, which is used as an alternative network slice identifier (alternative S-NSSAI) parameter.

S204: The SMF sends a command of modifying a current PDU session to the UE by using an AMF and an access network AN, where the command includes an alternative S-NSSAI parameter and an indication of terminating the current session and immediately re-establishing a new session.

S205: According to the command of the SMF, the UE releases the current PDU session and re-initiates a PDU session establishment request by using the alternative S-NSSAI. After the PDU session is successfully established, a packet between the game client and the game server can be transmitted in the low-latency network slice.

However, in the method, the UE establishes only one PDU session, and a packet of another application running on the UE is also handed over to the network slice specified by the alternative S-NSSAI. For example, when an email client is simultaneously run in a background of the UE, a packet sent by the email client is also handed over to the PDU session that uses the low-latency network slice. If the low-latency network slice is not connected to a data network (data network, DN) in which the email server is located, email sending and receiving are interrupted, affecting normal use. According to another aspect, even if the low-latency network slice is configured with the data network (data network name, DNN) in which the email server is located, receiving an email with an attachment in the low-latency network slice consumes more traffic. Compared with using a default subscribed slice, a higher tariff needs to be paid, and economic benefits are poor.

In conclusion, although the foregoing method ensures transmission performance of a service data flow in the application on the UE, transmission performance of another service data flow is affected.

Therefore, this application provides a new technical solution to reduce or even avoid impact on transmission performance of another service data flow while ensuring transmission performance of some service data flows.

In the new technical solution provided in this application, different service data flows may be transmitted in different network slices based on different transmission requirements of the different service data flows. For example, PDU sessions are established in different network slices, and the PDU sessions established in the different network slices may transmit different service data flows, so that transmission performance of the different service data flows does not affect each other.

In other words, a PDU session may be established in a network slice associated with a service data flow, and the service data flow is transmitted by using the PDU session.

In the technical solution provided in this application, from a perspective of the UE, in some implementations, the UE receives session establishment indication information, where the indication information carries a packet filter parameter and a network slice identifier. The UE establishes a new PDU session based on the indication information by using the network slice identifier. The UE sets a packet filter based on the specified packet filter parameter, and associates the packet filter with the newly established PDU session. A packet matching the packet filter in the UE is transmitted by using the newly established PDU session.

From a perspective of an access network device, in some implementations, the access network device receives network slice handover indication information, where the indication information carries a service data flow identifier and a network slice identifier. The access network device allocates, based on the indication information, an air interface resource to the service data in a radio resource pool corresponding to the network slice identifier. The access network device sends a radio resource control reconfiguration command to the UE to notify the terminal to transmit, by using the allocated air interface resource, a service flow packet specified by the service flow data flow identifier.

From a perspective of a core network device, in some implementations, the core network device obtains a service assurance policy, where the service assurance policy carries a service flow parameter and an identifier of a to-be-handed-over network slice. The core network device receives a trigger event to determine to hand over a packet flow corresponding to the service flow parameter to the network slice. The core network device sends service flow handover indication information to the access network device, where the indication information carries a packet flow identifier and the network slice identifier; or the core network device sends session establishment indication information to the terminal, where the indication information carries the packet filter parameter and the network slice identifier. The core network device sends a charging event to a charging function, where the charging event carries a terminal identifier and the identifier of the to-be-handed-over network slice.

FIG. 3 is a diagram of a communication procedure according to an embodiment of this application. As shown in FIG. 3, the communication method may include S301 to S304.

S301: A PCF sends policy information to an SMF entity, where the policy information indicates to transmit a first service data flow in a first network slice. Correspondingly, the SMF receives the policy information.

In some possible implementations, the policy information is carried in a session policy modification message and/or a session management policy association establishment response message.

In some possible implementations, the PCF may obtain assurance information from a UDR, where the assurance information indicates to transmit the first service data flow in the first network slice; and sends the policy information based on the assurance information.

In some possible implementations, the assurance information may include an identifier of the first network slice and an identifier of the first service data flow.

Optionally, the identifier of the first network slice included in the assurance information may include single network slice selection assistance information of the first network slice.

Optionally, the identifier of the first service data flow included in the assurance information may include an identifier of an application to which the first service data flow belongs.

Optionally, an identifier of the first service data flow included in the policy information may include a service data flow template of the first service data flow.

S302: The SMF sends indication information to a UE, where the indication information indicates to transmit the first service data flow in the first network slice. Correspondingly, the UE receives the indication information from the SMF.

In some possible implementations, when the SMF sends the indication information to the UE, the indication information is carried in a PDU session modification command message.

In some possible implementations, the indication information includes the identifier of the first network slice and a PDU session establishment indication.

In some possible implementations, the PDU session establishment indication is a packet filtering set of the first service data flow or a quality of service flow identifier of the first service data flow.

In some possible implementations, the PDU session establishment indication is a preset identifier. In this case, the indication information may further include a packet filtering set of the first service data flow or a quality of service flow identifier of the first service data flow.

In some possible implementations, the PDU session establishment indication is a preset identifier. In this case, the method may further include: sending a modification command message in a first PDU session, where the modification command message includes a packet filtering set of the first service data flow or a quality of service flow identifier of the first service data flow.

In some possible implementations, the PDU session establishment indication is a preset identifier. In this case, the method may further include: sending a data packet of the first service data flow in the first PDU session, where the data packet carries a reflective service indication, and the reflective service indication indicates the UE to derive, based on the data packet, a packet filtering set of the first service data flow or a packet filtering set corresponding to a quality of service flow identifier of the first service data flow.

In some possible implementations, the indication information includes the identifier of the first network slice and the quality of service flow identifier of the first service data flow.

It may be understood that, that the SMF sends the indication information to the UE may include: The SMF sends the indication information to the UE by using another network device.

S303: The UE establishes the first PDU session in the first network slice based on the indication information.

In an example, when the indication information includes the identifier of the first network slice and the PDU session establishment indication, the UE requests to establish the first PDU session based on the PDU session establishment indication by using the identifier of the first network slice.

S304: The UE transmits the first service data flow by using the first PDU session.

In some possible implementations, that the UE transmits the first service data flow by using the first PDU session includes: setting the packet filtering set of the first service data flow for the first PDU session; or setting, for the first PDU session, the packet filtering set corresponding to the quality of service flow identifier of the first service data flow.

In some possible implementations, before the UE receives the indication information from the SMF entity, the UE already can transmit the first service data flow by using another network slice. For example, before the UE receives the indication information from the SMF entity, the UE has established a PDU session in another network slice, and can transmit the first service data flow and/or another service data flow by using the PDU session. In this case, the UE already can obtain, based on the quality of service flow identifier of the first service data flow, the packet filtering set corresponding to the quality of service flow identifier of the first service data flow.

In some possible implementations, the SMF may receive the policy information from UDM. For example, the SMF entity receives session management subscription information from the UDM, where the session management subscription information carries the policy information.

In some possible implementations, the method may further include: The SMF entity sends charging information to a CHF entity, where the charging information indicates that the first service data flow is transmitted by using the first network slice.

FIG. 4 is a diagram of another communication procedure according to an embodiment of this application. As shown in FIG. 4, the communication method may include S401 to S404.

S401: A PCF sends policy information to an SMF entity, where the policy information indicates to transmit a first service data flow in a first network slice. Correspondingly, the SMF receives the policy information.

For this step, refer to S301 in the foregoing embodiment.

S402: The SMF sends first indication information to an access network device, where the first indication information indicates to transmit the first service data flow in the first network slice. Correspondingly, the access network device receives the first indication information from the SMF.

In some possible implementations, the first indication information is carried in an N2 interface session management message.

In some possible implementations, the first indication information includes an identifier of the first network slice and an identifier of the first service data flow, the identifier of the first network slice includes single network slice selection assistance information of the first network slice, and the identifier of the first service data flow includes a quality of service identifier of the first service data flow.

S403: The access network device transmits the first service data flow to a UE by using a DRB configured for the first network slice.

In some possible implementations, the access network device configures an air interface resource for the first network slice to establish a radio bearer (data radio bearer, DRB) and establish an association relationship between the DRB and the first service flow, so that the first service data flow is transmitted by using the DRB, thereby transmitting the first service data flow in the first network slice.

The association relationship between the DRB and the first service data flow may be an association relationship between an identifier of the DRB and a QFI of the first service data flow.

In some possible implementations, the access network device sends a radio resource control (radio resource control, RRC) reconfiguration command "reconfiguration" to the UE, to indicate to transmit the first service data flow by using a first data radio bearer configured for the first network slice, so that the UE can transmit the first service data flow by using the first DRB.

Optionally, the RRC reconfiguration command may carry an identifier of the first DRB and the QFI of the first service data flow.

In some possible implementations, the access network device receives second indication information from the SMF entity, where the second indication information indicates to transmit the first service data flow in a second network slice or indicates that a network slice for transmitting the first service data flow is empty. Correspondingly, the access network device transmits the first service data flow by using a second data radio bearer configured for the second network slice.

FIG. 5 is a schematic flowchart of a communication method according to an embodiment of this application. As shown in FIG. 5, the communication method may include S501 to S511.

S501: A UE establishes a PDU session, and uses default subscribed S-NSSAI.

S502: An SMF initiates a session management policy association (Session Management Policy Association) establishment request to a PCF, where the request indicates to change a network slice.

S503: The PCF sends a session management policy association establishment response to the SMF; in other words, after establishing a session management policy association, the PCF sends a session policy modification message to the SMF. The message carries a service data flow template (service data flow template) and an alternative network slice identifier (alternative S-NSSAI). The service data flow template indicates a service whose network slice needs to be changed. The alternative network slice identifier indicates to hand over a service data flow SDF matching the service data flow template to an alternative network slice for transmission.

S504: The SMF sends a data packet detection rule (packet detection rule, PDR) to a UPF according to a session management policy to detect the SDF, where the UPF is providing a service for a current PDU session.

For example, the PCF indicates the SMF to hand over an SDF of a specific application to the alternative network slice for transmission, and the SMF sends the PDR to the UPF. The PDR may include a uniform resource locator (uniform resource locator, URL) of a server of the specific application, or may include a triplet of the server, that is, a destination IP address, a protocol, and a port number. If an application identifier APP ID and the URL or triplet information of the corresponding application server have been configured in the UPF in advance, the PDR may further include the application identifier APP ID.

S505: A user transmits, by using the established PDU session, a service packet received and sent by the application, that is, the user may transmit, by using the PDU session, a service data flow matching the foregoing template.

S506: The UPF sends, to the SMF, an event that a start of transmission of the specified SDF is detected.

In a possible implementation, according to the session management policy, the SMF indicates the UPF to bind a downlink service packet of the SDF (that is, a downlink service packet of the specific application) to a quality of service flow (quality of service flow, QoS flow), and allocates a quality of service flow identifier (QoS flow identifier, QFI). After the binding succeeds, the downlink service packet of the specific application carries the QFI in a process in which the downlink service packet of the specific application is transmitted from the UPF to the UE through a gNB. The SMF sends a message to the UE through an AMF and the gNB. The message may carry a packet filter set (packet filter set, PFS) and a QFI to indicate the UE to bind an uplink service packet matching the PFS (that is, an uplink service packets of the specific application) to a QoS flow identified by the QFI. After the binding succeeds, the uplink service packet of the specific application carries the QFI in a process in which the uplink service packet of the specific application is transmitted from the UE to the UPF through the gNB.

In another possible implementation, the SMF does not indicate the UPF and the UE to bind the SDF to the QoS flow. In this case, a specific application service packet is transmitted by using a default QoS flow (default QoS flow) of the established PDU session.

S507: The SMF sends a message to the UE by using the AMF and the gNB, where the message may be a PDU session modification command.

In a possible implementation, the message may carry a packet filter set (packet filter set, PFS) and an alternative network slice identifier (alternative S-NSSAI) to indicate to hand over the QoS flow matching the PFS to a network slice specified by the alternative S-NSSAI for transmission. The PFS is set based on the service data flow template, and is used to distinguish the packet of the foregoing specific application. In this case, the PFS may be considered as an implicit indication for the UE to establish a PDU session for the QoS flow matching the PFS in the network slice specified by the alternative S-NSSAI. Alternatively, the message may carry an explicit PDU session establishment indication information element, a PFS, and alternative S-NSSAI to indicate to establish a PDU session for a QoS flow matching the PFS in the network slice specified by the alternative S-NSSAI.

In another possible implementation, the message may carry a QFI and alternative S-NSSAI to indicate to establish a PDU session for a QoS flow identified by the QFI in the network slice specified by the alternative S-NSSAI. In this case, the QFI may be considered as an implicit indication for the UE to establish a PDU session for the QoS flow identified by the QFI in the network slice specified by the alternative S-NSSAI. Alternatively, the message may carry an explicit PDU session establishment indication information element, a QFI, and alternative S-NSSAI to indicate to establish a PDU session for a QoS flow identified by the QFI in the network slice specified by the alternative S-NSSAI.

In still another possible implementation, the specific application service packet is transmitted by using a default QoS flow, and the message may carry an explicit PDU session establishment indication information element and alternative S-NSSAI, to indicate the UE to establish a PDU session in a network slice specified by the alternative S-NSSAI. Subsequently, the SMF will indicate that the specific application service packet is not transmitted by using the default QoS flow of the original PDU session, but is transmitted by using a newly established PDU session. For details, refer to subsequent step S309.

S508: After the UE receives a PDU session modification message, if the message carries the PFS or the QFI, the UE modifies a packet filter of the original PDU session based on the PDU session establishment indication, and stops transmitting, in the original PDU session, a packet matching the PFS or the QoS flow identified by the QFI.

S509: The UE establishes a new PDU session in the alternative network slice based on the PDU session establishment indication, where a session establishment request message carries the alternative S-NSSAI.

It may be understood that if the UE has a successfully established PDU session in the network slice indicated by the alternative S-NSSAI, the UE may directly use the established session.

S510: In a possible implementation, the UE sets a packet filter for the PDU session that is newly established or has been established in S309, and associates a specified PFS with the PDU session. When the message in S307 carries the QFI, the UE first determines, based on the QFI, a packet filter corresponding to the QoS flow, and then associates the packet filter with the PDU session that is newly established or has been established in S309.

In another possible implementation, when the specific application service packet is transmitted in the original PDU session by using the default QoS flow, the SMF indicates, in the new PDU session based on the session management policy, the UPF to bind a downlink service packet of the SDF (that is, a downlink service packet of the specific application) to the QoS flow, and allocates a QFI. After the binding succeeds, the downlink service packet of the specific application carries the QFI in a process in which the downlink service packet of the specific application is transmitted from the UPF to the UE through the gNB. The SMF sends a modification message of the new PDU session to the UE through the AMF and the gNB. The message carries the PFS and the QFI, to indicate the UE to associate the PFS with the new PDU session. The UE sets a packet filter for the new PDU session based on an indication. The UE binds the uplink service packet matching the PFS (that is, the uplink service packet of the specific application) to the QoS flow identified by the QFI. After the binding succeeds, the uplink service packet of the specific application carries the QFI in a process in which the uplink service packet of the specific application is transmitted from the UE to the UPF through the gNB. In still another possible implementation, the SMF can also indicate, to the gNB by using the modification message of the new PDU session, that a downlink QoS flow packet identified by the QFI carries a reflective QoS indication (Reflective QoS Indication) to indicate the UE to derive, based on address information in the downlink service packet of the specific application, the PFS that can filter the uplink service packet of the specific application, and the derived PFS is associated with the new PDU session. The UE sets the packet filter for the new PDU session based on the indication, and binds the uplink service packet matching the PFS (that is, the uplink service packet of the specific application) to the QoS flow identified by the QFI.

S511: The UE transmits, in the new PDU session based on the setting of the packet filter by using the network slice indicated by the alternative S-NSSAI, a packet matching the PFS. Another service packet on the UE is still transmitted in the PDU session by using a default network slice.

In this embodiment, a core network device sends a session establishment indication and an alternative network slice identifier to a terminal, where the session establishment indication may further carry a packet filter parameter or a quality of service flow identifier. The terminal receives the session establishment indication, and establishes a PDU session based on the indication by using the alternative network slice identifier. The UE sets the packet filter based on the specified packet filter parameter, or derives the packet filter parameter based on the reflective QoS indication and sets the packet filter, and associates the packet filter with the newly established PDU session. In the method, the terminal transmits, in the PDU session newly established in the alternative network slice, the packet matching the packet filter, so that when the terminal does not support an NSSP, a network slice used for a specific service can be changed without affecting another service.

FIG. 6 is a schematic flowchart of a network slice handover method according to an embodiment of this application. As shown in FIG. 6, the communication method may include S600 to S612.

S600: A gNB configures a dedicated air interface resource or a preferential air interface resource for an assurance network slice ensuring service experience.

An air interface resource is used to transmit a packet between the gNB and a UE. The dedicated air interface resource can be used only by a PDU session in a specified network slice or a group of network slices. The preferential air interface resources are preferentially used by a PDU session in a specified network slice or a group of network slices when required. If these resources have been allocated to another network slice for use, the resources may be preempted when necessary. In other words, when the resources are not used by the specified network slice or the group of network slices, the another network slice can use these air interface resources to transmit a packet. In addition, the gNB may further allocate a shared resource to a network slice or a group of network slices, and use the shared resource equally with another network slice. However, the gNB usually does not configure the dedicated air interface resource or the preferential air interface resource for a default network slice that transmits a general service packet.

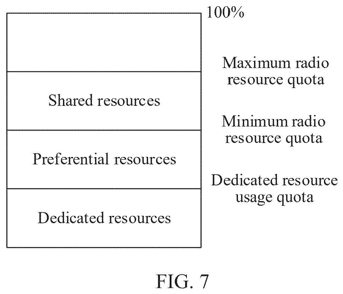

Specifically, FIG. 7 is a diagram of a radio resource configuration of a RAN. In a radio access network, resource isolation between slices is supported, and resources may be classified into three resource types: a dedicated resource, a preferential resource, and a shared resource. Three parameters, namely, a dedicated resource usage quota (rRMPolicyDedicatedRatio), a minimum radio resource quota (rRMPolicyMinRatio), and a maximum radio resource quota (rRMPolicyMaxRatio), each represent a percentage of air interface resources allocated to a network slice in an entire air interface resource pool, and the three parameters are represented by numbers from 0 to 100. For example, it is configured that rRMPolicyDedicatedRatio = 10, indicating that dedicated resources of the network slice account for 10% of total air interface resources. If it is also configured that rRMPolicyMinRatio = 30, it indicates that preferential resources of the network slice account for 20% (that is, 30% minus 10%) of the total air interface resources.

S601: A terminal establishes a PDU session in a default subscribed network slice.

Optionally, in a session establishment process, an SMF may obtain session management subscription information of the UE from UDM, where the session management subscription information may include a specific service assurance indication and a specified alternative network slice (alternative S-NSSAI), and the alternative S-NSSAI identifies the assurance network slice in S600.

S602: The SMF obtains a service assurance policy of the UE from a PCF, where the service assurance policy may be included in a session management policy association establishment response message or a session policy modification message. The service assurance policy includes a service data flow template and the alternative S-NSSAI, to indicate to hand over an SDF matching a service data flow template to the alternative network slice for transmission.

S603: The SMF sends a PDR to a UPF to detect the SDF.

For details of this step, refer to S504. Details are not described herein again.

S604: The UE transmits, by using the PDU session, a packet matching the service data flow template, and the SMF and the UPF bind the SDF to a QoS flow according to a session management policy, and allocate a QoS flow identifier QFI.

S605: The UPF reports, to the SMF, an event that a start of transmission of the specified SDF is detected.

S606: The SMF determines, based on the specific service assurance indication obtained in S601 or the service assurance policy obtained in S602, to trigger service assurance.

S607: The SMF sends a message to a gNB through an AMF, where the message may be an N2 interface session management message, which carries a UE ID, a PDU session identifier (PDU Session ID), the QFI, and the alternative S-NSSAI; and the alternative S-NSSAI identifies the assurance network slice, to indicate the gNB to hand over a QoS flow identified by the QFI to the assurance network slice for transmission.

S608: The gNB configures an air interface resource for the allocated assurance network slice based on the message received in S607, to establish a new radio bearer (data radio bearer, DRB) used to transmit the QoS flow identified by the QFI. The gNB sends an RRC reconfiguration command to the UE to indicate the UE to transmit, by using the established DRB, the QoS flow identified by the QFI. In this case, a packet of the QoS flow is transmitted by using the DRB in the network slice indicated by the alternative S-NSSAI. Another service packet on the UE is still transmitted by using a default network slice.

S609: When the UE stops using the application, the UPF reports, to the SMF, an event that a stop of a service flow is detected.

S610: The SMF determines, based on the specific service assurance indication obtained in S601 or the service assurance policy obtained in S602, to stop the service assurance.

S611: The SMF sends a message to the gNB through the AMF, where the message carries the UE ID, the PDU session ID, the QFI, and the alternative S-NSSAI; and the alternative S-NSSAI identifies the default network slice or is empty.

S612: The gNB releases, based on the message received in S611, a DRB established by using the air interface resource of the assurance slice. A QoS flow specified by the QFI is remapped to the DRB of the default network slice.

In this embodiment, a core network device obtains a service assurance subscription indication or the service assurance policy, and sends, to a RAN, an indication message for handing over the QoS flow to the specified network slice, where the message carries a QoS flow identifier and an alternative network slice identifier. A radio access network receives an indication message for handing over a specified QoS flow to the alternative network slice, allocates a dedicated resource or a preferential resource of the alternative network slice to establish the DRB, associates the specified QoS flow with the DRB, and sends an RRC reconfiguration command to the terminal to indicate the terminal to transmit the specified QoS flow by using a DRB of a specified network slice resource. In the method, the core network indicates the radio access network to establish the data radio bearer in the specified network slice, and change a network slice used for a specific service without affecting another service.

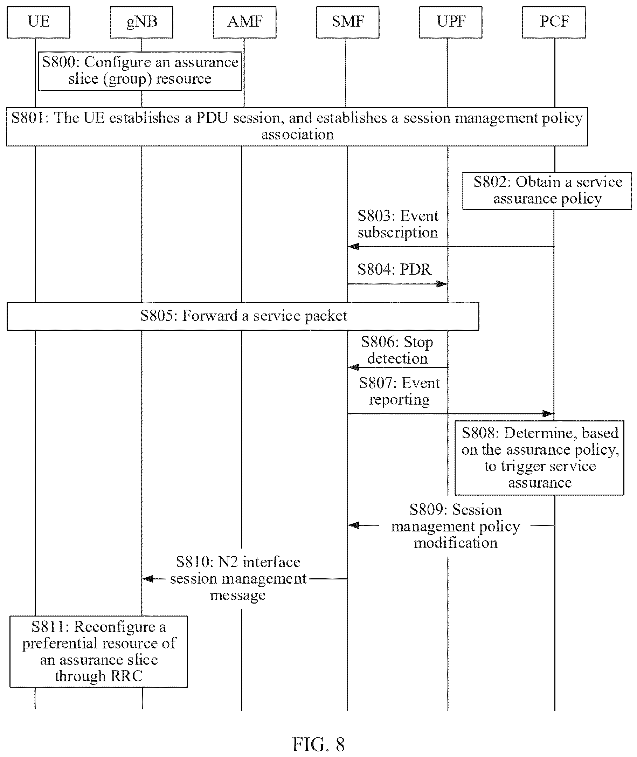

FIG. 8 is a schematic flowchart of a network slice handover method according to another embodiment of this application. As shown in FIG. 8, the communication method may include S800 to S811.

S800: A gNB configures a dedicated air interface resource or a preferential air interface resource for an assurance network slice.

S801: A UE establishes a PDU session in a default subscribed network slice. In a session establishment process, an SMF establishes a session management policy association with a PCF.

S802: The PCF obtains a service assurance policy of the UE from UDR, where the service assurance policy includes an APP ID and alternative S-NSSAI, and the policy indicates that a packet of an application identified by the APP ID is transmitted by using the assurance network slice indicated by the alternative S-NSSAI.

S803: The PCF sends an event subscription message to the SMF, where the event subscription message carries the APP ID to indicate the SMF to report an event to notify the PCF when it is detected that the application identified by the APP ID transmits a packet.

S804: The SMF sends a PDR to a UPF to detect the packet of the application identified by the APP ID.

S805: The UE transmits, by using the PDU session, a service packet matching the APP ID. The SMF and the UPF bind a service data flow of an application to a QoS flow, and allocate a QFI for the QoS flow.

S806: The UPF reports, to the SMF, an event that a start of transmission by a specified application is detected.

S807: The SMF reports an event to the PCF to notify the PCF that the packet of the application indicated by the APP ID is being transmitted and carries a QFI parameter.

S808: The PCF determines, based on the service assurance policy obtained in S602, to perform service assurance on the QoS flow identified by the QFI, to hand over the QoS flow identified by the QFI to the assurance network slice identified by the alternative S-NSSAI for transmission.

S809: The PCF sends a session management policy modification command to the SMF, where the session management policy modification command carries a UE ID, a PDU session ID, a QFI, and alternative S-NSSAI; and the alternative S-NSSAI identifies the assurance network slice to indicate to hand over the QoS flow identified by the QFI to the assurance network slice for transmission.

S810: The SMF sends an N2 interface session management message to the gNB through an AMF, where the N2 interface session management message carries the UE ID, the PDU session ID, the QFI, and the alternative S-NSSAI, to indicate the gNB to hand over the QoS flow identified by the QFI to the assurance network slice for transmission.

S811: The gNB establishes a DRB by using an air interface resource of an assurance slice, and sends an RRC reconfiguration command to the UE to indicate the UE to transmit, by using the newly established DRB, the QoS flow identified by the QFI.

In this embodiment, the PCF network element obtains the service assurance policy, where the service assurance policy includes an application identifier and an identifier of the alternative network slice. After an event that a specified application transmits a packet is received, the session management policy modification command is sent to the SMF based on the assurance policy, where the message carries a QoS flow identifier and an alternative network slice identifier. The method may achieve a same technical effect as that in the foregoing embodiment.

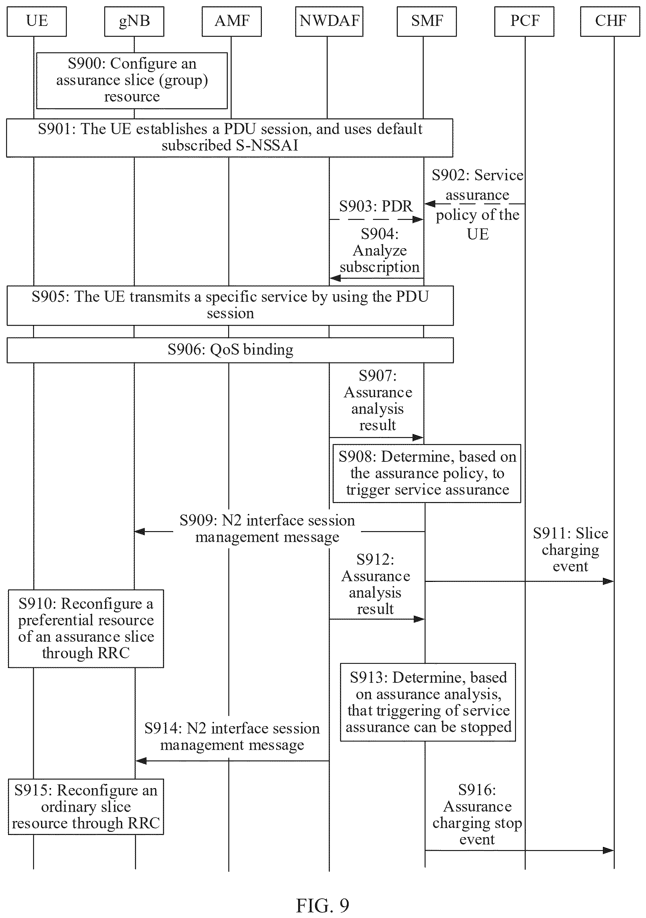

FIG. 9 is a schematic flowchart of switching a network slice charging method according to another embodiment of this application. As shown in FIG. 9, the communication method may include S900 to S916.

S900: A gNB configures a dedicated air interface resource or a preferential air interface resource for an assurance network slice ensuring service experience.

S901: A terminal establishes a PDU session in a default subscribed network slice.

Optionally, in a session establishment process, an SMF may obtain session management subscription information of a UE from UDM, where the session management subscription information may include a specific service assurance indication and alternative S-NSSAI, and the alternative S-NSSAI indicates the assurance network slice in step S900.

S902: The SMF obtains a service assurance policy of the UE from a PCF, where the service assurance policy may be included in a session management policy association establishment response message or a session policy modification message. The service assurance policy includes a service data flow template and the alternative S-NSSAI, to indicate to hand over an SDF matching a service data flow template to an alternative network slice for transmission.

S903: The SMF sends a PDR to a UPF to detect the SDF.

S904: The SMF sends a subscription analysis request to an NWDAF, where the subscription analysis request may carry a UE ID of a terminal to request to analyze service experience of the specified terminal. The SMF can also request to analyze service experience of all terminals in a cell. The SMF may further set an analysis report filtering parameter in the subscription analysis request based on the SDF to specify that only service experience of an SDF matching the foregoing template is analyzed.

S905: The terminal transmits, by using the PDU session, a packet matching the service data flow template, and the SMF and the UPF bind the SDF to a QoS flow based on the session management policy, and allocate a QFI.

S906: The UPF reports, to the SMF, an event that a start of transmission of the specified SDF is detected.

S907: The NWDAF sends a service experience analysis result to the SMF.

S908: The SMF triggers service assurance when determining, based on a specific service assurance indication obtained in step S901 or the service assurance policy obtained in step S902 and the analysis result obtained in step S907, that network quality deteriorates.

S909: The SMF sends a message to the gNB through an AMF, where the message may be an N2 interface session management message, which carries a UE ID, a PDU session ID, the QFI, and the alternative S-NSSAI; and the alternative S-NSSAI identifies the assurance network slice, to indicate the gNB to hand over a QoS flow identified by the QFI to the assurance network slice for transmission.

S910: The gNB establishes a DRB by using an air interface resource of an assurance slice, and sends an RRC reconfiguration command to the UE to indicate the UE to transmit, by using the established DRB, the QoS flow identified by the QFI.

S911: The SMF sends a slice charging event to a CHF, where the slice charging event carries the UE ID, the PDU session ID, the QFI, and the alternative S-NSSAI, to indicate that the QoS flow identified by the QFI has been handed over to the assurance network slice for transmission. The CHF performs charging based on a tariff for the assurance network slice.

S912: The NWDAF periodically sends the analysis result to the SMF. If the network quality recovers, the SMF receives an analysis result indicating that service experience of a default network slice meets a requirement.

S913: The SMF determines, based on the analysis result obtained in step S912, to stop service assurance.

S914: The SMF sends a message to the gNB through the AMF, where the message carries the UE ID, the PDU session ID, the QFI, and the alternative S-NSSAI; and the alternative S-NSSAI identifies the default network slice or is empty.

S915: The gNB releases, based on the message received in step S914, the DRB established by using the air interface resource of the assurance slice. The QoS flow specified by the QFI is remapped to the DRB of the default network slice.

S916: The SMF sends the slice charging event to the CHF, where the slice charging event carries the UE ID, the PDU session ID, the QFI, and the alternative S-NSSAI; and the alternative S-NSSAI may be a default slice used to indicate that the QoS flow identified by the QFI has been handed over to the default network slice for transmission. The CHF performs charging based on a tariff preset for the default network slice. Alternatively, the alternative S-NSSAI is empty, and is used to indicate to stop service assurance charging.

In this embodiment, the SMF network element obtains the service assurance policy and the service experience analysis result, and determines, based on the analysis result and the assurance policy, to send, to a RAN, an indication message indicating to hand over the QoS flow to the specified network slice. The method can change a network slice used by a specific service and ensure experience of the specific service, and assurance charging is performed. In addition, in the method, when network experience deteriorates, a core network indicates a radio access network to establish a data radio bearer in a specified network slice, so that the network slice used by the specific service is changed, the experience of the specific service is ensured, and the assurance charging is performed. When the network quality becomes better, the default network slice is switched back, and the service assurance charging is stopped in time.

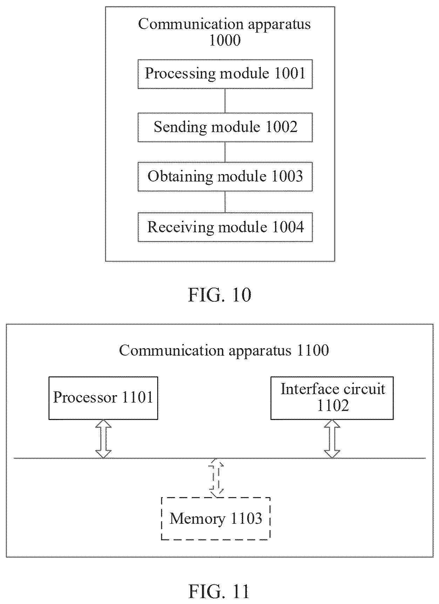

FIG. 10 is a diagram of a structure of a communication apparatus according to an embodiment of this application. As shown in FIG. 10, the communication apparatus 1000 may include a processing module 1001 and a sending module 1002.

In a first example, the communication apparatus 1000 may be configured to implement the communication method in the embodiment shown in FIG. 5. The processing module 1001 may be configured to perform S501, S505, S508, S509, S510 and S511. The sending module 1002 may be configured to perform S502, S503, S504, S506, and S507.

Optionally, the communication apparatus 1000 may further include an obtaining module 1003 and a receiving module 1004.

In a second example, the communication apparatus 1000 may be configured to implement the communication method in the embodiment shown in FIG. 6. The processing module 1001 may be configured to perform S600, S601, S604, S605, S606, S608 and S609. The sending module 1002 may be configured to perform S603, S607, and S611. The obtaining module 1003 may be configured to perform S602 and S610. The receiving module 1004 may be configured to perform S612.

In a third example, the communication apparatus 1000 may be configured to implement the communication method in the embodiment shown in FIG. 8. The processing module 1001 may be configured to perform S800, S801, S805, S806, and S807. The sending module 1002 may be configured to perform S803, S804, S809, S810, and S811. The obtaining module 1003 may be configured to perform S802 and S808.

In a fourth example, the communication apparatus 1000 may be configured to implement the communication method in the embodiment shown in FIG. 9. The processing module 1001 may be configured to perform S900, S901, S905, S906, and S915. The sending module 1002 may be configured to perform S903, S904, S907, S909, S910, S911, S912, S914, and S916. The obtaining module 1003 may be configured to perform S902, S908, and S913.

FIG. 11 is a diagram of a structure of a communication apparatus according to another embodiment of this application. As shown in FIG. 11, the communication apparatus 1100 includes a processor 1101 and an interface circuit 1102. The processor 1101 and the interface circuit 1102 are coupled to each other. It may be understood that the interface circuit 1102 may be a transceiver or an input/output interface. Optionally, the communication apparatus 1100 may further include a memory 1103, configured to: store instructions executed by the processor 1101, or store input data required by the processor 1101 to run instructions, or store data generated after the processor 1101 runs instructions.

In an example, the processor 1101 is configured to implement a function of the processing module 1001, and the interface circuit 1102 is configured to implement functions of the sending module 1002, the obtaining module 1003, and the receiving module 1004.

The communication apparatus 1100 may be a communication device, or may be a chip used in a communication device.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. An example storage medium is coupled to the processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When implemented by using software, all or some of the embodiments may be implemented in a form of a computer program product. The computer program product includes one or more computer programs or instructions. When the computer programs or the instructions are loaded and executed on a computer, all or some of the procedures or functions described in embodiments of this application are performed. The computer may be a general-purpose computer, a dedicated computer, a computer network, a network device, a user equipment, or another programmable apparatus. The computer program or instructions may be stored in a computer-readable storage medium, or may be transmitted from one computer-readable storage medium to another computer-readable storage medium. For example, the computer program or instructions may be transmitted from one website, computer, server, or data center to another website, computer, server, or data center in a wired or wireless manner. The computer-readable storage medium may be any usable medium that can be accessed by the computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In various embodiments of this application, unless otherwise stated or there is a logic conflict, terms and/or descriptions in different embodiments are consistent and may be mutually referenced, and technical features in different embodiments may be combined based on an internal logical relationship thereof to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving, by a terminal device UE, indication information from a session management function SMF entity, wherein the indication information indicates to transmit a first service data flow in a first network slice;
establishing, by the UE, a first protocol data unit PDU session in the first network slice based on the indication information; and
transmitting, by the UE, the first service data flow by using the first PDU session.

2. The method according to claim 1, wherein the indication information is carried in a PDU session modification command message.

3. The method according to claim 1 or 2, wherein the indication information comprises an identifier of the first network slice and a PDU session establishment indication; and
establishing, by the UE, the first PDU session in the first network slice based on the indication information comprises:
requesting, by the UE based on the PDU session establishment indication, to establish the first PDU session by using the identifier of the first network slice.

4. The method according to claim 3, wherein transmitting, by the UE, the first service data flow by using the first PDU session comprises:
setting a packet filtering set of the first service data flow for the first PDU session; or
setting, for the first PDU session, a packet filtering set corresponding to a quality of service flow identifier of the first service data flow.

5. The method according to claim 4, wherein the PDU session establishment indication is the packet filtering set; or
the PDU session establishment indication is a preset identifier, and the indication information further comprises the packet filtering set.

6. The method according to claim 4, wherein the PDU session establishment indication is a preset identifier; and
the method further comprises:
receiving a modification command message in the first PDU session, wherein the modification command message comprises the packet filtering set; or
receiving a data packet of the first service data flow in the first PDU session, wherein the data packet carries a reflective service indication; and deriving the packet filtering set based on the reflective service indication.

7. A communication method, comprising:
receiving, by a session management function SMF entity, policy information, wherein the policy information indicates to transmit a first service data flow in a first network slice; and
sending, by the SMF entity, indication information to a terminal device UE or an access network device, wherein the indication information indicates to transmit the first service data flow in the first network slice.

8. The method according to claim 7, wherein receiving, by the SMF entity, the policy information comprises: receiving, by the SMF entity, a session policy modification message and/or a session management policy association establishment response message from a policy control function PCF entity, wherein the session policy modification message and/or the session management policy association establishment response message carries the policy information.

9. The method according to claim 7, wherein receiving, by the SMF entity, the policy information comprises: receiving, by the SMF entity, session management subscription information from unified data management UDM, wherein the session management subscription information carries the policy information.

10. The method according to any one of claims 7 to 9, wherein the policy information comprises an identifier of the first network slice and an identifier of the first service data flow, wherein the identifier of the first network slice is comprised in the policy information and the identifier of the first network slice comprises single network slice selection assistance information of the first network slice, and wherein the identifier of the first service data flow is comprised in the policy information and the identifier of the first service data flow comprises a service data flow template of the first service data flow.

11. The method according to any one of claims 7 to 10, wherein when the SMF entity sends the indication information to the UE, the indication information is carried in a protocol data unit PDU session modification command message.

12. The method according to claim 11, wherein the indication information comprises the identifier of the first network slice and a PDU session establishment indication.

13. The method according to claim 12, wherein the PDU session establishment indication is a packet filtering set of the first service data flow or a quality of service flow identifier of the first service data flow; or the PDU session establishment indication is a preset identifier, and the indication information further comprises a packet filtering set of the first service data flow or a quality of service flow identifier of the first service data flow.

14. The method according to claim 12, wherein the PDU session establishment indication is a preset identifier; and
the method further comprises:
sending a modification command message in the first PDU session, wherein the modification command message comprises a packet filtering set of the first service data flow or a quality of service flow identifier of the first service data flow; or
sending a data packet of the first service data flow in the first PDU session, wherein the data packet carries a reflective service indication, and the reflective service indication indicates the UE to derive, based on the data packet, a packet filtering set of the first service data flow or a packet filtering set corresponding to a quality of service flow identifier of the first service data flow.

15. The method according to any one of claims 7 to 10, wherein when the SMF entity sends the indication information to the access network device, the indication information is carried in an N2 interface session management message.

16. The method according to claim 15, wherein the indication information comprises the identifier of the first network slice and a quality of service flow identifier of the first service data flow.

17. The method according to any one of claims 7 to 16, further comprising:
sending, by the SMF entity, charging information to a charging function CHF entity, wherein the charging information indicates that the first service data flow is transmitted by using the first network slice.

18. A communication method, comprising:
sending, by a policy control function PCF entity, policy information to a session management function SMF entity, wherein the policy information indicates to transmit a first service data flow in a first network slice.

19. The method according to claim 18, wherein the policy information is carried in a session policy modification message and/or a session management policy association establishment response message.

20. The method according to claim 18 or 19, further comprising:
obtaining, by the PCF, assurance information from a unified data repository UDR, wherein the assurance information indicates to transmit the first service data flow in the first network slice.

21. The method according to claim 20, wherein the assurance information comprises an identifier of the first network slice and an identifier of the first service data flow, the identifier of the first network slice comprised in the assurance information comprises single network slice selection assistance information of the first network slice, and the identifier of the first service data flow comprised in the assurance information comprises an identifier of an application to which the first service data flow belongs.

22. The method according to any one of claims 18 to 21, wherein the policy information comprises the identifier of the first network slice and the identifier of the first service data flow, the identifier of the first network slice comprised in the policy information comprises the single network slice selection assistance information of the first network slice, and the identifier of the first service data flow comprised in the policy information comprises a service data flow template of the first service data flow.

23. A communication method, comprising:
receiving, by an access network device, first indication information from a session management function SMF entity, wherein the first indication information indicates to transmit a first service data flow in a first network slice; and
transmitting, by the access network device, the first service data flow by using a first data radio bearer configured for the first network slice.

24. The method according to claim 23, wherein the first indication information is carried in an N2 interface session management message.

25. The method according to claim 23 or 24, wherein the first indication information comprises an identifier of the first network slice and an identifier of the first service data flow, the identifier of the first network slice comprises single network slice selection assistance information of the first network slice, and the identifier of the first service data flow comprises a quality of service identifier of the first service data flow.

26. The method according to any one of claims 23 to 25, comprising:
receiving, by the access network device, second indication information from the SMF entity, wherein the second indication information indicates to transmit the first service data flow in a second network slice or indicates that a network slice for transmitting the first service data flow is empty; and
transmitting, by the access network device, the first service data flow by using a second data radio bearer configured for the second network slice.

27. A communication apparatus, comprising a functional module configured to implement the method according to any one of claims 1 to 26.

28. A communication apparatus, comprising a memory and a processor, wherein
the memory is configured to store program instructions; and
the processor is configured to execute the program instructions in the memory to implement the method according to any one of claims 1 to 26.

29. A computer-readable storage medium, wherein the computer-readable storage medium stores program code to be executed by a computer, and the program code comprises instructions used to implement the method according to any one of claims 1 to 26.

30. A computer program product, wherein the computer program product comprises instructions used to implement the communication method according to any one of claims 1 to 26.
